# EUROPEAN PATENT APPLICATION

(11) **EP 4 524 198 A1**
(43) Date of publication of application: **19.03.2025**
(21) Application number: 23870558.6
(22) Date of filing: 21.09.2023
(51) Int. Cl.: C08L 67/04, C08L 3/02, C08K 3/34, C08K 3/26, A47G 21/18

(54) **STRAW AND PREPARATION METHOD THEREFOR**

(30) Priority: 26.09.2022 CN 202211176985
(71) Applicant: Beijing Phabuilder Biotechnology Co., Ltd., Beijing 101300 (CN)
(72) Inventor: XU, Xiangdong, Beijing 101300 (CN); WU, Yuhe, Beijing 101300 (CN); DENG, Tiejun, Beijing 101300 (CN); LAN, Yuxuan, Beijing 101300 (CN); ZHANG, Yixin, Beijing 101300 (CN)
(74) Representative: HGF
(86) International application number: PCT/CN2023/120255
(87) International publication number: WO 2024/067326

(57) **Abstract**

The present invention relates to the technical field of polymer material manufacturing, and in particular to a biodegradable material and preparation method thereof. The biodegradable material is prepared by using a resin comprising only PHA, and further incorporating suitable fillers and/or auxiliary agents. The biodegradable material of the present invention exhibits excellent performance in that it can swiftly and thoroughly degrade in natural environments, ensuring complete environmental friendliness throughout its life cycle. As a result, it facilitates the reduction of white environmental pollution caused by disposable plastic products and the lowering of petroleum consumption.

## Description

### TECHNICAL FIELD

The present invention relates to the field of polymer materials, and in particular to a straw and a preparation method therefor.

### BACKGROUND

With rapid economic development, the standard of living has increased, leading to higher demands for environmental quality. However, the widespread use of non-degradable disposable plastics globally has exacerbated the issue of white pollution in human living environments. Commonly known biodegradable materials such as polylactic acid (PLA), polycaprolactone (PCL), polybutylene adipate terephthalate (PBAT), polybutylene succinate (PBS), and polyhydroxyalkanoates (PHA) have shown significant development, with continuously improving properties. Their applications span various fields including daily necessities, medical, packaging, and catering fields. Nevertheless, some biodegradable materials are petroleum-based such as PBS and PBAT, and some biodegradable materials require specific industrial composting conditions for degradation such as PLA. Therefore, except for PHA, these materials, when in use, cannot achieve complete environmental friendliness and rapid degradation throughout their life cycle.

Presently, research on biodegradable materials primarily focuses on blends like PLA, PBS, and PBAT. For example, patent publication No. CN112538239A discloses a biodegradable straw using degradable resins such as PBS, PBAT, and PLA, or their blends. However, there is limited research on biodegradable materials solely using polyhydroxyalkanoates. Therefore, there is a need to develop environmentally friendly polyhydroxyalkanoates with good performance, maintaining good material properties, and capable of natural environmental degradation, along with specialized granules.

### SUMMARY

The purpose of the present invention is to overcome the issues present in the prior art, namely the incomplete environmental friendliness and slow degradation of disposable materials throughout their life cycle. Specifically, the present invention aims to address the use of petroleum-based degradable resins or degradable polyesters that require industrial composting conditions for degradation. To achieve the objective, the present invention prepares straws using solely biologically derived and naturally degradable polyhydroxyalkanoates.

In a first aspect of the present invention, a biodegradable material is provided, comprising a resin, wherein the resin is PHA.

Preferably, a mass content of the PHA in the biodegradable material is in a range from 50% to 98% (preferably 60% to 85% or 70% to 98%), including any value within the range, such as 50%, 55%, 60%, 65%, 70%, 72%, 73%, 74%, 75%, 76%, 77%, 80%, 85%, 90%, 91%, 92%, 93%, 94%, 95%, 96%, 97%, or 98%.

Preferably, the biodegradable material further comprises a filler and/or an auxiliary agent.

Preferably, a mass content of the filler in the biodegradable material is in a range from 0% to 48% (preferably 5% to 48% or 13% to 38%), including any value within the range, such as 0%, 5%, 10%, 13%, 15%, 20%, 22%, 23%, 24%, 25%, 26%, 27%, 28%, 30%, 35%, 38%, 40%, 45%, or 48%.

Preferably, a mass ratio of the PHA to the filler in the biodegradable material is in a range of 1:1 to 25:1, further preferably1:1 to 20:1 or 1.5:1 to 10:1, and more preferably 2:1 to 5:1. For example, the mass ratio of the PHA to the filler is in a range of (1, 1.5, 2, 3, 4, 5, 6, 7, 8, 9, 10, 11, 12, 13, 14, 15, 16, 17, 18, 19, 20, 21, 22, 23, 24, or 25):1.

In a specific embodiment of the present invention, the mass ratio of the PHA to the filler in the biodegradable material is 2:1, 3:1, 3.35:1, 3.55:1, 24:1, or 4.88:1.

In a specific embodiment of the present invention, the biodegradable material comprises, in terms of parts by mass, 70 parts to 100 parts, preferably 70 parts to 85 parts (e.g., 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 parts) of PHA and 0 part to 50 parts, preferably 5 parts to 50 parts (e.g., 0, 5, 10, 15, 17, 20, 22, 23, 25, 30, 35, 40, 45, or 50 parts) of filler.

Preferably, the PHA comprises a homopolymer or a copolymer (e.g., a random copolymer and a block copolymer) of monomers constituting the PHA.

Further preferably, the PHA comprises a monomer, a dimer, or a multimer of the monomers constituting the PHA.

More preferably, the monomers constituting the PHA comprise but are not limited to one, two, three, or more of 3-hydroxybutyric acid, 4-hydroxybutyric acid, 3-hydroxyvaleric acid, 3-hydroxypropionic acid, 5-hydroxypentanoic acid, 3-hydroxyhexanoic acid, 6-hydroxyhexanoic acid, 3-hydroxyoctanoic acid, or 3-hydroxynonanoic acid.

More preferably, the PHA comprises but is not limited to one, two, or more of PHB, PHV, P3HP, PHO, PHN, PHBV, P34HB, or PHBHHx.

The PHA can be a single type of PHA or a mixture of two or more types of PHA, as required in specific embodiments.

Preferably, the PHA can be obtained through chemically synthesized, bio-fermented, or purchase. In a specific embodiment of the present invention, the PHA comprises P34HB; preferably, a molar content of 4HB in the P34HB is 1% to 30%, including any value within the range, such as 1%, 5%, 10%, 15%, 20%, 25%, or 30%; preferably, the molar content of the 4HB in the P34HB is 5% or 20%.

In a specific embodiment of the present invention, the PHA comprises PHBV; preferably, a molar content of 3HV in the PHBV is 1% to 30%, including any value within the range, such as 1%, 3%, 5%, 10%, 15%, 20%, 25%, or 30%; preferably, the molar content of the 3HV in the PHBV is 3% or 10%.

In a specific embodiment of the present invention, the PHA comprises PHBHHx; preferably, a molar content of 3HHx in the PHBHHx is 1% to 30%, including any value within the range, such as 1%, 5%, 10%, 15%, 20%, 25%, or 30%; preferably, the molar content of the 3HHx in the PHBHHx is 5% or 10%.

In a specific embodiment of the present invention, the PHA is a mixture of PHB and P34HB; preferably, a molar content of 4HB in the P34HB is 20%; preferably, a mass ratio of the PHB to the P34HB in the mixture is in a range of 1:1 to 5:1, preferably 2:1 to 3:1, for example, (1, 1.5, 2, 2.12, 2.5, 2.85, 2.95, 3, 3.5, 3.57, 4, 4.5, or 5):1.

In a specific embodiment of the present invention, the PHA is a mixture of P34HB and PHBHHx; preferably, a molar content of 4HB in the P34HB is 5%, and a molar content of 3HHx in the PHBHHx is 10%; preferably, a mass ratio of the P34HB to the PHBHHx in the mixture is in a range of 1:1 to 5:1, preferably 2:1, for example, (1, 1.5, 2, 2.5, 3, 3.5, 4, 4.5, or 5):1.

In a specific embodiment of the present invention, the PHA is a mixture of PHBHHx and P34HB; preferably, a molar content of 4HB in the P34HB is 20%, and a molar content of 3HHx in the PHBHHx is 5%; preferably, a mass ratio of the PHBHHx to the P34HB in the mixture is in a range of 1:1 to 5:1, preferably 2:1, for example, (1, 1.5, 2, 2.5, 3, 3.5, 4, 4.5, or 5):1.

In a specific embodiment of the present invention, the PHA is a mixture of PHBV and P34HB; preferably, a molar content of 3HV in the PHBV is 3%, and a molar content of 4HB in the P34HB is 20%; preferably, a mass ratio of the PHBV to the P34HB in the mixture is in a range of 1:1 to 5:1, preferably 2:1, for example, (1, 1.5, 2, 2.5, 3, 3.5, 4, 4.5, or 5):1.

Preferably, the filler comprises one, two, or more of talc, calcium carbonate, starch, celite, or kaolin. In a specific embodiment of the present invention, the biodegradable material comprises 96 parts of PHA and 4 parts of filler, wherein the PHA is a mixture of PHB and P34HB in a mass ratio of 24:1, and the filler is calcium carbonate.

In a specific embodiment of the present invention, the biodegradable material comprises 75 parts of PHA and 25 parts of filler, wherein the PHA is a mixture of PHB and P34HB in a mass ratio of 2:1, and the filler is talc.

In a specific embodiment of the present invention, the biodegradable material comprises 75 parts of PHA and 25 parts of filler, wherein the PHA is PHBV, and the filler is talc.

In a specific embodiment of the present invention, the biodegradable material comprises 75 parts of PHA and 25 parts of filler, wherein the PHA is PHBHHx, and the filler is composed of 20 parts of calcium carbonate and 5 parts of starch.

In a specific embodiment of the present invention, the biodegradable material comprises 75 parts of PHA and 25 parts of filler, wherein the PHA is a mixture of P34HB and PHBHHx in a mass ratio of 2:1, and the filler is composed of 15 parts of talc and 10 parts of kaolin.

In a specific embodiment of the present invention, the biodegradable material comprises 75 parts of PHA and 25 parts of filler, wherein the PHA is a mixture of PHBHHx and P34HB in a mass ratio of 2:1, and the filler is talc.

In a specific embodiment of the present invention, the biodegradable material comprises 75 parts of PHA and 25 parts of filler, wherein the PHA is a mixture of PHBV and P34HB in a mass ratio of 2:1, and the filler is composed of 20 parts of talc and 5 parts of starch.

In a specific embodiment of the present invention, the biodegradable material comprises 77 parts of PHA and 23 parts of filler, wherein the PHA is a mixture of PHB and P34HB in a mass ratio of 57:20, and the filler is talc.

In a specific embodiment of the present invention, the biodegradable material comprises 78 parts of PHA and 22 parts of filler, wherein the PHA is a mixture of PHB and P34HB in a mass ratio of 53:25, and the filler is talc.

In a specific embodiment of the present invention, the biodegradable material comprises 83 parts of PHA and 17 parts of filler, wherein the PHA is a mixture of PHB and P34HB in a mass ratio of 62:21, and the filler is talc.

In a specific embodiment of the present invention, the biodegradable material comprises 75 parts of PHA and 25 parts of filler, wherein the PHA is a mixture of PHB and P34HB in a mass ratio of 2: 1, and the filler is celite.

Preferably, a mass ratio of the PHA to the auxiliary agent in the biodegradable material is in a range of 15:1 to 50:1, for example, (15, 20, 21, 22, 23, 24, 25, 26, 27, 28, 29, 30, 35, 40, 45, or 50): 1. Further preferably, the mass ratio of the PHA to the auxiliary agent in the biodegradable material is in a range of 20:1 to 40:1.

The auxiliary agent comprises but is not limited to one, two, or more of a coupling agent, a chain extender, a lubricant, a heat stabilizer, a hydrolysis-resistant agent, or an antioxidant.

In a specific embodiment of the present invention, the auxiliary agent comprises a coupling agent, a chain extender, a heat stabilizer, a hydrolysis-resistant agent, and an antioxidant.

Preferably, an addition mass of the coupling agent to PHA is 0% to 10%, preferably 0.1% to 2%, and further preferably 0.2% to 0.8%, including any value within the range, such as 0%, 0.00001%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%.

Further preferably, the coupling agent comprises but is not limited to one, two, or more of titanium ester coupling agent TC-201, titanium ester coupling agent TC-TTS, titanium ester coupling agent TC-130, titanium ester coupling agent TC-131, maleic anhydride, silane coupling agent KH550, silane coupling agent KH560, silane coupling agent KH570, silane coupling agent CG-619, silane coupling agent CG-580, or silane coupling agent CG-590.

In a specific embodiment of the present invention, the coupling agent is composed of silane coupling agent KH550, silane coupling agent CG-619, and maleic anhydride; preferably, a mass ratio of the silane coupling agent KH550 to the silane coupling agent CG-619 to the maleic anhydride is 2:1:2. In a specific embodiment of the present invention, the coupling agent is composed of titanium ester coupling agent TC-201, titanium ester coupling agent TC-130, and maleic anhydride; preferably, a mass ratio of the titanium ester coupling agent TC-201 to the titanium ester coupling agent TC-130 to the maleic anhydride is 4:3:3.

In a specific embodiment of the present invention, the coupling agent is composed of titanium ester coupling agent TC-TTS, titanium ester coupling agent TC-131, and silane coupling agent KH560; preferably, a mass ratio of the titanium ester coupling agent TC-TTS to the titanium ester coupling agent TC-131 to the silane coupling agent KH560 is 2:1:2.

In a specific embodiment of the present invention, the coupling agent is composed of silane coupling agent KH570, silane coupling agent CG-580, and maleic anhydride; preferably, a mass ratio of the silane coupling agent KH570 to the silane coupling agent CG-580 to the maleic anhydride is 2:3:5. In a specific embodiment of the present invention, the coupling agent is composed of titanium ester coupling agent TC-TTS, silane coupling agent CG-590, and maleic anhydride; preferably, a mass ratio of the titanium ester coupling agent TC-TTS to the silane coupling agent CG-590 to the maleic anhydride is 3:3:4.

In a specific embodiment of the present invention, the coupling agent is composed of titanium ester coupling agent TC-130, maleic anhydride, and silane coupling agent CG-619; preferably, a mass ratio of the titanium ester coupling agent TC-130 to the maleic anhydride to the silane coupling agent CG-619 is 4:3:3.

Preferably, an addition mass of the chain extender to PHA is in a range of 0% to 10%, preferably 0.1% to 2%, and further preferably 0.2% to 0.8%, including any value within the range, such as 0%, 0.00001%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%.

Further preferably, the chain extender comprises but is not limited to one, two, or more of chain extender BASF ADR 4400, chain extender BASF ADR 4468, chain extender DX-5, chain extender 6901, chain extender MSA7200, or chain extender HER.

In a specific embodiment of the present invention, the chain extender is composed of chain extender BASF ADR 4400 and chain extender 6901; preferably, a mass ratio of the chain extender BASF ADR 4400 to the chain extender 6901 is 3:2.

In a specific embodiment of the present invention, the chain extender is composed of chain extender DX-5, chain extender MSA7200, and chain extender BASF ADR 4400; preferably, a mass ratio of the chain extender DX-5 to the chain extender MSA7200 to the chain extender BASF ADR 4400 is 1:1:3.

In a specific embodiment of the present invention, the chain extender is composed of chain extender MSA7200, chain extender HER, and chain extender BASF ADR 4468; preferably, a mass ratio of the chain extender HER to the chain extender MSA7200 to the chain extender BASF ADR 4468 is 3:2:2.

In a specific embodiment of the present invention, the chain extender is composed of chain extender DX-5, chain extender 6901, and chain extender BASF ADR 4468; preferably, a mass ratio of the chain extender DX-5 to the chain extender 6901 to the chain extender BASF ADR 4468 is 2:2:1. In a specific embodiment of the present invention, the chain extender is composed of chain extender DX-5, chain extender 6901, and chain extender HER; preferably, a mass ratio of the chain extender DX-5 to the chain extender 6901 to the chain extender HER is 1:3:1.

Preferably, an addition mass of the lubricant to PHA is in a range of 0% to 10%, preferably 0.1% to 2%, and further preferably 0.2% to 0.8%, including any value within the range, such as 0%, 0.00001%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%.

Further preferably, the lubricant comprises but is not limited to fully degradable polyester and/or PHA serving as a lubricant.

More preferably, the fully degradable polyester and/or the PHA serving as a lubricant is low molecular weight fully degradable polyester and/or PHA.

More preferably, a molecular weight of the fully degradable polyester is in a range of 1000 to 8000, and a molecular weight of the PHA serving as a lubricant is 1500 to 8000.

Further preferably, a molecular weight of the fully degradable polyester and the PHA serving as a lubricant is in a range of 4000 to 5000, including any value within the range, such as 4000, 4100, 4200, 4300, 4400, 4500, 4600, 4700, 4800, 4900, or 5000.

In a specific embodiment of the present invention, the lubricant is low molecular weight fully degradable polyester.

In a specific embodiment of the present invention, the lubricant is composed of low molecular weight fully degradable polyester and PHA, wherein preferably, the PHA is PHB, and further preferably, a mass ratio of the fully degradable polyester to the PHA is 3:2.

Preferably, an addition mass of the heat stabilizer to PHA is in a range of 0% to 10%, preferably 0.1% to 2%, and further preferably 0.2% to 0.8%, including any value within the range, such as 0%, 0.00001%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%.

Preferably, the heat stabilizer comprises but is not limited to one, two, or more of calcium stearate, zinc stearate, nanocellulose, nano-montmorillonite, and/or fumed silica.

In a specific embodiment of the present invention, the heat stabilizer is composed of calcium stearate and fumed silica; preferably, a mass ratio of the calcium stearate to the fumed silica is 2:3. In a specific embodiment of the present invention, the heat stabilizer is composed of zinc stearate and nanocellulose; preferably, a mass ratio of the zinc stearate to the nanocellulose is 1:1.

In a specific embodiment of the present invention, the heat stabilizer is composed of zinc stearate, nano-montmorillonite, and fumed silica; preferably, a mass ratio of the zinc stearate to the nano-montmorillonite to the fumed silica is 3:2:4.

In a specific embodiment of the present invention, the heat stabilizer is composed of calcium stearate, zinc stearate, and nano-montmorillonite; preferably, a mass ratio of the calcium stearate to the zinc stearate to the nano-montmorillonite is 3:3:4.

In a specific embodiment of the present invention, the heat stabilizer is composed of calcium stearate, nanocellulose, and fumed silica; preferably, a mass ratio of the calcium stearate to the nanocellulose to the fumed silica is 5:2:3.

In a specific embodiment of the present invention, the heat stabilizer is composed of calcium stearate, zinc stearate, and fumed silica; preferably, a mass ratio of the calcium stearate to the zinc stearate to the fumed silica is 1:1:3.

Preferably, an addition mass of the hydrolysis-resistant agent to PHA is in a range of 0% to 10%, preferably 0.1% to 2%, and further preferably 0.2% to 0.8%, including any value within the range, such as 0%, 0.00001%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%.

Preferably, the hydrolysis-resistant agent comprises but is not limited to one, two, or three of Shanghai Langyi HY2000, polycarbodiimide UN-03, and/or hydrolysis-resistant agent TNPP.

In a specific embodiment of the present invention, the hydrolysis-resistant agent is composed of Shanghai Langyi HY2000 and hydrolysis-resistant agent TNPP; preferably, a mass ratio of the Shanghai Langyi HY2000 to the hydrolysis-resistant agent TNPP is 2:1.

In a specific embodiment of the present invention, the hydrolysis-resistant agent is composed of Shanghai Langyi HY2000 and polycarbodiimide UN-03; preferably, a mass ratio of the Shanghai Langyi HY2000 to the polycarbodiimide UN-03 is 2:1.

In a specific embodiment of the present invention, the hydrolysis-resistant agent is composed of polycarbodiimide UN-03 and hydrolysis-resistant agent TNPP; preferably, a mass ratio of the polycarbodiimide UN-03 to the hydrolysis-resistant agent TNPP is 3:1.

Preferably, an addition mass of the antioxidant to PHA is in a range of 0% to 10%, preferably 0.1% to 2%, and further preferably 0.2% to 0.8%, including any value within the range, such as 0%, 0.00001%, 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or 10%.

Preferably, the antioxidant comprises but is not limited to one, two, or three of tetrakis[β-(3,5-di-tert-butyl-4-hydroxyphenyl)propionic acid]pentaerythritol ester, tri(2,4-di*-tert-*butylphenyl)phosphite, and/or antioxidant CYANOX 1790.

In a specific embodiment of the present invention, the antioxidant is composed of tetrakis[β-(3,5-di-tert-butyl-4-hydroxyphenyl)propionic acid]pentaerythritol ester and tri(2,4-di*-tert-*butylphenyl)phosphite; preferably, a mass ratio of the tetrakis[β-(3,5-di-*tert*-butyl-4-hydroxyphenyl)propionic acid]pentaerythritol ester to the tri(2,4-di-tert-butylphenyl)phosphite is 1:1.

In a specific embodiment of the present invention, the antioxidant is composed of tetrakis[β-(3,5-di-*tert*-butyl-4-hydroxyphenyl)propionic acid]pentaerythritol ester, tri(2,4-di*-tert-*butylphenyl)phosphite, and antioxidant CYANOX 1790; preferably, a mass ratio of the tetrakis[β-(3,5-di-*tert*-butyl-4-hydroxyphenyl)propionic acid]pentaerythritol ester to the tri(2,4-di*-tert-*butylphenyl)phosphite to the antioxidant CYANOX 1790 is (2-4):(1-2):1, preferably 6:3:2. In a specific embodiment of the present invention, the biodegradable material is composed of PHA and a filler.

In a specific embodiment of the present invention, the biodegradable material comprises a resin, a filler, and an auxiliary agent.

In a specific embodiment of the present invention, the biodegradable material is composed of PHA, a filler, and an auxiliary agent.

Preferably, a mass ratio of the PHA to the filler to the auxiliary agent in the biodegradable material is 1:(0-1):(0-0.067), preferably 1:(0.05-1):(0.02-0.067) or 1:(0.04-1):(0.02-0.067) or 1:(0.04-0.5):(0.025-0.05) or 1:(0.2-0.5):(0.025-0.05). Further preferably, a mass ratio of the PHA to the filler to the auxiliary agent in the biodegradable material is 1:(0.04-0.34):(0.025-0.036), for example, 1:0.2:0.034, 1:0.28:0.037, 1:0.33:0.035, 1:0.33:0.036, 1:0.3:0.037, 1:0.33:0.038, 1:0.33:0.039, or 1:0.04:0.03.

In a specific embodiment of the present invention, the biodegradable material comprises, in terms of parts by mass, 70 parts to 100 parts (e.g., 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 parts) of PHA, 0 part to 50 parts (e.g., 0, 5, 10, 15, 17, 20, 22, 23, 25, 30, 35, 40, 45, or 50 parts) of filler, and 0 part to 5 parts (e.g., 0, 1, 2, 2.5, 2.6, 2.65, 2.7, 2.75, 2.8, 2.85, 2.9, 2.95, 3, 4, or 5 parts) of auxiliary agent.

Preferably, the biodegradable material comprises a straw.

Preferably, the straw can have standard thickness, length, or inner and outer diameters. Depending on the different usage scenarios, adjustments can be made accordingly. For example, straws for porridge can be prepared to have a wider inner diameter, while those for drinks can be prepared to have a narrower inner diameter. If used for implants like in the eye or heart, these straws may be prepared with nanometer-scale inner diameters. If used for oral liquid intake, these straws may be prepared in a ribbed structure with reinforcing ribs on the surface.

Preferably, the biodegradable material can be prepared using any method available in the prior art. In a second aspect of the present invention, a method for preparing the biodegradable material according to the first aspect is provided.

The preparation method comprises mixing raw materials to obtain a mixture, and subsequently extruding the mixture from an extruder, wherein the raw materials comprise a resin.

Preferably, the preparation method comprises mixing PHA and a filler to obtain the mixture. A mass ratio of the PHA to the filler is in a range of 1:1 to 25:1, preferably 1:1 to 20:1 or 1.5:1 to 10:1, and more preferably 2:1 to 5:1 . In a specific embodiment of the present invention, the mass ratio of the PHA to the filler is 2:1, 3:1, 3.35:1, 3.55:1, or 4.88:1.

Preferably, in the preparation method, an addition mass of the PHA to a total mass is in a range of 50% to 98% (preferably 60% to 85% or 70% to 98%), including any value within the range, such as 50%, 55%, 60%, 65%, 70%, 72%, 73%, 74%, 75%, 76%, 77%, 80%, 85%, 90%, 93%, 94%, 95%, 96%, 97%, or 98%.

Preferably, in the preparation method, an addition mass of the filler to a total mass is in a range of 0% to 48% (preferably 13% to 38% or 5% to 48%), including any value within the range, such as 0%, 5%, 10%, 13%, 15%, 20%, 22%, 23%, 24%, 25%, 26%, 27%, 28%, 30%, 35%, 38%, 40%, 45%, or 48%.

Preferably, the preparation method further comprises the step of adding an auxiliary agent. For example, PHA, a filler, and an auxiliary agent are mixed to obtain a mixture. An addition mass ratio of the PHA to the auxiliary agent is in a range of 15:1 to 50:1, preferably 20:1 to 40:1, including any value within the range, such as (15, 20, 21, 22, 23, 24, 25, 26, 27, 28, 29, 30, 35, 40, 45, 50):1. Preferably, in the preparation method, an addition mass of the auxiliary agent to a total mass is in a range of 0% to 30%, preferably 0.6% to 12%, and further preferably 1.2% to 4.8%, including any value within the range, such as 0.00001%, 0.1%, 0.2%, 0.3%, 0.4%, 0.5%, 0.6%, 0.7%, 0.8%, 0.9%, 1%, 1.2%, 1.5%, 2%, 2.1%, 2.2%, 2.3%, 2.4%, 2.5%, 2.6%, 2.7%, 2.8%, 2.9%, 3%, 3.5%, 4%, 4.5%, 4.8%, 5%, 10%, 12%, 15%, 20%, 25%, or 30%.

Types and amounts of the PHA, the filler, and the auxiliary agent are consistent with what is defined in the first aspect.

Preferably, the preparation method further comprises the step of stretching and pelletizing the mixture.

Preferably, the stretching and pelletization method is performed by air-cooling or water-cooling.

In a specific embodiment of the present invention, the stretching and pelletization method is performed by air-cooling; an air-cooling temperature is in a range of 0 °C to 50 °C (preferably 5 °C to 45 °C), including any value within the range, such as 0, 5, 10, 15, 20, 25, 30, 35, 40, 45, or 50 °C. In a specific embodiment of the present invention, the preparation method comprises:
S1: mixing PHA, and, a filler and/or an auxiliary agent to obtain a mixture;
S2: extruding the mixture obtained from S1 from a twin-screw extruder, stretching and pelletizing the extrudate, and subsequently feeding the granules into a straw extruder.

Preferably, step S1 further comprises a drying step after mixing to obtain the mixture.

Further preferably, a temperature for the drying step is in a range of 50 °C to 100 °C (preferably 60 °C to 95 °C), including any value within the range, such as 50, 55, 60, 65, 70, 75, 80, 85, 90, 95, or 100 °C.

Further preferably, a duration for the drying step is in a range of 1 hour to 5 hours (preferably 3 hours), including any value within the range, such as 1, 2, 3, 4, or 5 hours.

Preferably, the operating temperature of the twin-screw extruder in step S2 is in a range of 100 °C to 160 °C (preferably 140 °C to 160 °C), including any value within the range, such as 100, 105, 110, 115, 120, 125, 130, 135, 140, 145, 150, 155, or 160 °C.

Preferably, a screw speed of the twin-screw extruder in step S2 is in a range of 200 rpm to 350 rpm (preferably 230 rpm to 300 rpm), including any value within the range, such as 200, 210, 220, 230, 240, 250, 260, 270, 280, 290, 300, 310, 320, 330, 340, or 350 rpm.

Preferably, the operating temperature of the straw extruder in step S2 is in a range of 120 °C to 200 °C (preferably 140 °C to 180 °C), including any value within the range, such as 120, 125, 130, 135, 140, 145, 150, 155, 160, 165, 170, 175, 180, 185, 190, 195, or 200 °C.

Preferably, a screw speed of the straw extruder in step S2 is in a range of 30 rpm to 80 rpm (preferably 35 rpm to 50 rpm), including any value within the range, such as 30, 35, 40, 45, 50, 55, 60, 65, 70, 75, or 80 rpm.

Preferably, the stretching and pelletization method in step S2 is performed by air-cooling.

In a specific embodiment of the present invention, the stretching and pelletization method is performed by air-cooling; the air-cooling temperature is in a range of 0 °C to 50 °C (preferably 5 °C to 45 °C), including any value within the range, such as 0, 5, 10, 15, 20, 25, 30, 35, 40, 45, or 50 °C. In a specific embodiment of the present invention, the preparation method comprises:
S1: mixing the PHA, and, the filler and/or the auxiliary agent in a mixer for 1 minute to 10 minutes (preferably 5 minutes to 10 minutes), drying the mixture at 50 °C to 100 °C (preferably 60 °C to 95 °C) for 1 hour to 5 hours (preferably 3 hours) to obtain a dried mixture;
S2: feeding the dried mixture obtained from S1 into the twin-screw extruder, melting, blending, and extruding the mixture at temperatures between 140 °C to 160 °C with a screw speed of 230 rpm to 300 rpm, followed by stretching and pelletizing the extrudate by air-cooling (preferably air-cooling at 5 °C to 45 °C) to obtain straw-specific granules;
S3: feeding the straw-specific granules obtained from S2 into the straw extruder, extruding straws at temperatures between 140°C to 180 °C with a screw speed of 35 rpm to 50 rpm, and shaping the straws by water-cooling to obtain final straws.

In a specific embodiment of the present invention, the preparation method comprises:
S1: mixing 70 parts to 100 parts (e.g., 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 parts) of PHA, 0 part to 50 parts (e.g., 0, 5, 10, 15, 17, 20, 22, 23, 25, 30, 35, 40, 45, or 50 parts) of filler, and 0 part to 3 parts (preferably 2 parts to 3 parts or 2.65 parts to 2.95 parts) of auxiliary agent in a high-speed mixer for 5 minutes to 10 minutes, and drying the mixed material at 60 °C to 95 °C for 3 hours;
S2: putting the dried mixture into the twin-screw extruder for melting, blending, and extruding, and stretching and pelletizing the extrudate by air-cooling to produce straw-specific granules;
S3: feeding the straw-specific granules obtained from S2 into the straw extruder, extruding straws, shaping the straws by water-cooling, and cutting the straws into specific lengths.

Preferably, the twin-screw extruder operates at temperatures between 100 °C to 160 °C, with a screw speed of 230 rpm to 300 rpm and pelletizing the extrudate by an air-cooling.

Preferably, the straw extruder operates at temperatures between 140 °C to 180 °C, with a screw speed of 35rpm to 50 rpm.

Preferably, the air-cooling temperature is at 5 °C to 45 °C.

In a third aspect of the present invention, a biodegradable material obtained by the aforementioned preparation method is provided.

In a fourth aspect of the present invention, the application of the aforementioned biodegradable material in the fields of biomedicine or food is provided.

The term "comprises", "comprising" or "includes" described herein is an open-ended description that includes the specified ingredients or steps as described, as well as other specified ingredients or steps that do not substantially affect the technical effect.

The term "and/or" described herein encompasses all combinations of the items connected by the term, and each combination should be deemed to have been individually listed herein. For example, "A and/or B" encompasses "A", "A and B", and "B". Also for example, "A, B and/or C" encompasses "A", "B", "C", "A and B", "A and C", "B and C", and "A and B and C".

The abbreviations used herein are compared with their full names in Table 1 below.

**Table 1. Comparison table of abbreviations and full names**

| Abbreviations | Full names |
|---|---|
| PHA | Polyhydroxyalkanoate |
| PHB | Poly-3-hydroxybutyrate |
| PHV | Poly-3-hydroxyvalerate |
| P3HP | Poly-3-hydroxypropionate |
| PHO | Poly-3-hydroxyoctanoate |
| PHN | Poly-3-hydroxynonanoate |
| PHBV | Copolymer of 3-hydroxybutyric acid and 3-hydroxyvaleric acid |
| 3HV | 3-hydroxyvaleric acid |
| PHBHHx | Copolymer of 3-hydroxybutyric acid and 3-hydroxyhexanoic acid |
| 3HHx | 3-hydroxyhexanoic acid |
| P3HB4HB or P34HB | Copolymer of 3-hydroxybutyric acid and 4-hydroxybutyric acid |
| 4HB | 4-hydroxybutyric acid |
| PBAT | Poly (butyleneadipate-co-terephthalate) |
| PBS | Polybutylene succinate |
| PBT | Polybutylene terephthalate |
| PLA | Polylactic acid |

Through the above technical solutions, the present invention possesses the following advantages:
(1) The biodegradable material of the present invention utilizes only PHA as the resin, which is sourced purely from biological origins without requiring chemical synthesis. The additives used are all permitted for food contact, ensuring non-toxicity throughout the production and application processes. The biodegradable material degrades rapidly in natural environments, more in alignment with the concept of "carbon neutrality".
(2) By incorporating fillers or auxiliary agents into the resin containing only PHA, the present invention reduces the consumption of PHA while maintaining mechanical properties such as strength, toughness, and thermal stability. This further lowers production costs.
(3) The biodegradable material of the present invention allows for adjustments in the composition of PHA during the preparation process according to different usage needs; that is, it allows for adjustable performance by compounding various types of PHA to meet different performance requirements for straws in various usage scenarios.
(4) During the preparation of the biodegradable material of the present invention, the air-cooling method enables faster crystallization of the material, ensures excellent shaping, simplifies the production process, and provides higher efficiency, thereby making it suitable for industrial production. Analysis suggests that this phenomenon could be attributed to the crystallization characteristics of PHA. PHA tends to crystallize rapidly within a specific temperature range rather than in environments with lower temperatures or higher specific heat capacity. The cooling method of the present application achieves convenient, rapid, and continuous cooling, thus enabling PHA to crystallize and solidify faster under air-cooling conditions. This enhances the production efficiency and economic benefits of straw manufacturing.

### BRIEF DESCRIPTION OF THE DRAWINGS

FIG. 1 illustrates the prepared straw-specific granules;
FIG. 2 illustrates the prepared straw, wherein an orange is used as a reference object to compare the length or thickness of the straw.

### DETAILED DESCRIPTION

In order to make the objectives, technical solutions, and advantages of the embodiments of the present invention clearer, specific embodiments and comparative examples are detailed below to describe the present invention. However, the present invention is in no way limited by these examples. Based on the embodiments of the present invention, all other embodiments derived by those of ordinary skill in the art without creative work shall fall within the protection scope of the present invention.

The source of the materials used in the present invention:
Unless otherwise specified, all materials used in the embodiments of the present invention are commercially available. All the auxiliary agents are additives permitted for food contact. The evaluation standards for the test items used in the embodiments are provided in Table 2 below.

**Table 2: Evaluation Standards for Test Items**

| Test Item | Reference Standard |
|---|---|
| Melt Index at 170 °C, 2.16 kg (g/10 min) | GB/T 3682-2000 |
| Tensile Strength (MPa) | GB/T 1040.2-2006 |
| Tensile Elongation at Break (%) | GB/T 1040.2-2006 |
| Notched Izod Impact Strength (KJ/m²) | GB/T 1843-2008 |
| Heat Deflection Temperature at 0.45 MPa (°C) | GB/T 1633-2000 |

### Embodiment 1: PHB + P3HB4HB

A mixture comprising, in terms of parts by mass, 50 parts of PHB, 25 parts of P3HB4HB (with a 4HB molar content of 20%), 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert-*butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 3.

**Table 3: Test Data for Straw-Specific Granules of PHB + P3HB4HB**

| Test Item | Value |
|---|---|
| Melt Index at 170 °C, 2.16 kg (g/10 min) | 5.9 |
| Density (g/cm³) | 1.23 |
| Tensile Strength (MPa) | 25.4 |
| Tensile Elongation at Break (%) | 67.8 |
| Notched Izod Impact Strength (KJ/m²) | 4.0 |
| Heat Deflection Temperature at 0.45 MPa (°C) | 92 |
| Material Source | Biomass |
| Degradation Conditions | Natural Environment/Composting |

### Embodiment 2: PHB + P3HB4HB + Calcium Carbonate with Low Amounts of Calcium Carbonate

A mixture comprising, in terms of parts by mass, 75 parts of PHB, 21 parts of P3HB4HB (with a 4HB molar content of 20%), 4 parts of calcium carbonate, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[[3-(3,5-di-*tert*-butyl-4-hydroxyphenyl)propionic acid]pentaerythritol ester, 0.15 parts of tri(2,4-di-*tert*-butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35rpm to 50 rpm. The straws were subsequently shaped by water-cooling and cut into straws of specific lengths.

The test results of the obtained material are shown in Table 4.

**Table 4: Test Data for Straw-Specific Granules of PHB + P3HB4HB + Calcium Carbonate with Low Amounts of Calcium Carbonate**

| Test Item | Value |
|---|---|
| Melt Index at 170 °C, 2.16 kg (g/10 min) | 5.8 |
| Density (g/cm³) | 1.24 |
| Tensile Strength (MPa) | 25.7 |
| Tensile Elongation at Break (%) | 64.9 |
| Notched Izod Impact Strength (KJ/m²) | 4.1 |
| Heat Deflection Temperature at 0.45 MPa (°C) | 93 |
| Material Source | Biomass |
| Degradation Conditions | Natural Environment/Composting |

### Embodiment 3: PHB + P3HB4HB + Talc

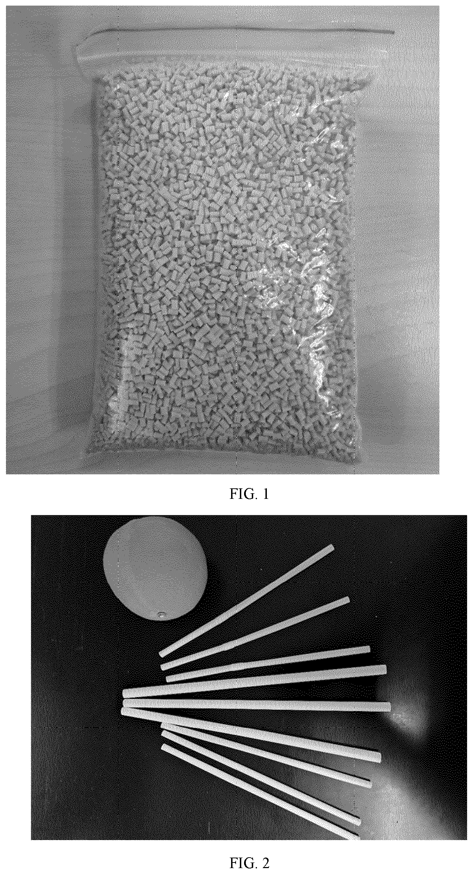

A mixture comprising, in terms of parts by mass, 50 parts of PHB, 25 parts of P3HB4HB (with a 4HB molar content of 20%), 25 parts of talc, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules, as shown in FIG. 1.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths, as shown in FIG. 2. The test results of the obtained material are shown in Table 5.

**Table 5: Test Data for Straw-Specific Granules of PHB + P3HB4HB + Talc**

| Test Item | Value |
|---|---|
| Melt Index at 170 °C, 2.16 kg (g/10 min) | 5.2 |
| Density (g/cm³) | 1.30 |
| Tensile Strength (MPa) | 28.3 |
| Tensile Elongation at Break (%) | 55.4 |
| Notched Izod Impact Strength (KJ/m²) | 4.5 |
| Heat Deflection Temperature at 0.45 MPa (°C) | 98 |
| Material Source | Biomass |
| Degradation Conditions | Natural Environment/Composting |

### Embodiment 4: PHBV + Talc

A mixture comprising, in terms of parts by mass, 75 parts of PHBV (with a 3HV molar content of 10%), 25 parts of talc, 0.2 parts of titanium ester coupling agent TC-201, 0.15 parts of titanium ester coupling agent TC-130, 0.15 parts of maleic anhydride, 0.3 parts of BASF ADR 4400, 0.1 parts of chain extender DX-5, 0.1 parts of chain extender MSA7200, 0.3 parts of low molecular weight fully degradable polyester lubricant, 0.2 parts of low molecular weight PHB, 0.25 parts of zinc stearate, 0.25 parts of nanocellulose, 0.2 parts of Shanghai Langyi HY2000 hydrolysis-resistant agent, 0.1 parts of polycarbodiimide UN-03, 0.2 parts of tetrakis[β-(3,5-di-*tert*-butyl-4-hydroxyphenyl)propionic acid]pentaerythritol ester, and 0.2 parts of tri(2,4-di-*tert-*butylphenyl)phosphite was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 6.

**Table 6: Test Data for Straw-Specific Granules of PHBV + Talc**

| Test Item | Value |
|---|---|
| Melt Index at 170 °C, 2.16 kg (g/10 min) | 3.9 |
| Density (g/cm³) | 1.31 |
| Tensile Strength (MPa) | 27.8 |
| Tensile Elongation at Break (%) | 52.0 |
| Notched Izod Impact Strength (KJ/m²) | 4.2 |
| Heat Deflection Temperature at 0.45 MPa (°C) | 96 |
| Material Source | Biomass |
| Degradation Conditions | Natural Environment/Composting |

### Embodiment 5: PHBHHx + Calcium Carbonate + Starch

A mixture comprising, in terms of parts by mass, 75 parts of PHBHHx (with a 3HHx molar content of 10%), 20 parts of calcium carbonate, 5 parts of starch, 0.2 parts of titanium ester coupling agent TC-TTS, 0.1 parts of titanium ester coupling agent TC-131, 0.2 parts of silane coupling agent KH560, 0.1 parts of BASF ADR 4468, 0.1 parts of chain extender MSA7200, 0.15 parts of chain extender HER, 0.3 parts of low molecular weight fully degradable polyester lubricant, 0.2 parts of low molecular weight PHB lubricant, 0.15 parts of zinc stearate, 0.1 parts of nano-montmorillonite, 0.2 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded attemperatures between 140 °C to 180 °C with a screw speed of 35 rpm to 50 rpm. The straws were subsequently shaped by water-cooling and cut into straws of specific lengths.

The test results of the obtained material are shown in Table 7.

**Table 7: Test Data for Straw-Specific Granules of PHBHHx + Calcium Carbonate + Starch**

| Test Item | Value |
|---|---|
| Melt Index at 170 °C, 2.16 kg (g/10 min) | 4.5 |
| Density (g/cm³) | 1.32 |
| Tensile Strength (MPa) | 27.6 |
| Tensile Elongation at Break (%) | 54.1 |
| Notched Izod Impact Strength (KJ/m²) | 4.4 |
| Heat Deflection Temperature at 0.45 MPa (°C) | 95 |
| Material Source | Biomass |
| Degradation Conditions | Natural Environment/Composting |

### Embodiment 6: P3HB4HB + PHBHHx + Talc + Kaolin

A mixture comprising, in terms of parts by mass, 50 parts of P3HB4HB (with a 4HB molar content of 5%), 25 parts of PHBHHx (with a 3HHx molar content of 10%), 15 parts of talc, 10 parts of kaolin, 0.25 parts of maleic anhydride, 0.1 parts of silane coupling agent KH570, 0.15 parts of silane coupling agent CG-580, 0.3 parts of BASF ADR 4400, 0.2 parts of chain extender 6901, 0.5 parts of low molecular weight fully degradable polyester lubricant, 0.15 parts of calcium stearate, 0.15 parts of zinc stearate, 0.2 parts of nano-montmorillonite, 0.2 parts of Shanghai Langyi HY2000 hydrolysis-resistant agent, 0.1 parts of polycarbodiimide UN-03, 0.2 parts of tetrakis[β-(3,5-di-*tert-*butyl-4-hydroxyphenyl)propionic acid]pentaerythritol ester, and 0.2 parts of tri(2,4-di*-tert-*butylphenyl)phosphite was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded attemperatures between 140 °C to 180 °C with a screw speed of 35 rpm to 50 rpm. The straws were subsequently shaped by water-cooling and cut into straws of specific lengths.

The test results of the obtained material are shown in Table 8.

**Table 8: Test Data for Straw-Specific Granules of P3HB4HB + PHBHHx + Talc + Kaolin**

| Test Item | Value |
|---|---|
| Melt Index at 170 °C, 2.16 kg (g/10 min) | 5.2 |
| Density (g/cm³) | 1.31 |
| Tensile Strength (MPa) | 27.5 |
| Tensile Elongation at Break (%) | 50.6 |
| Notched Izod Impact Strength (KJ/m²) | 4.3 |
| Heat Deflection Temperature at 0.45 MPa (°C) | 95 |
| Material Source | Biomass |
| Degradation Conditions | Natural Environment/Composting |

### Embodiment 7: PHBHHx + P3HB4HB + Talc

A mixture comprising, in terms of parts by mass, 50 parts of PHBHHx (with a 3HHx molar content of 5%), 25 parts of P3HB4HB (with a 4HB molar content of 20%), 25 parts of talc, 0.15 parts of titanium ester coupling agent TC-TTS, 0.2 parts of maleic anhydride, 0.15 parts of silane coupling agent CG-590, 0.1 parts of BASF ADR 4468, 0.2 parts of chain extender DX-5, 0.2 parts of chain extender 6901, 0.3 parts of low molecular weight fully degradable polyester lubricant, 0.2 parts of low molecular weight PHB, 0.25 parts of calcium stearate, 0.1 parts of nanocellulose, 0.15 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 9.

**Table 9: Test Data for Straw-Specific Granules of PHBHHx + P3HB4HB + Talc**

| Test Item | Value |
|---|---|
| Melt Index at 170 °C, 2.16 kg (g/10 min) | 4.9 |
| Density (g/cm³) | 1.30 |
| Tensile Strength (MPa) | 28.3 |
| Tensile Elongation at Break (%) | 50.2 |
| Notched Izod Impact Strength (KJ/m²) | 4.4 |
| Heat Deflection Temperature at 0.45 MPa (°C) | 94 |
| Material Source | Biomass |
| Degradation Conditions | Natural Environment/Composting |

### Embodiment 8: PHBV + P3HB4HB + Talc + Starch

A mixture comprising, in terms of parts by mass, 50 parts of PHBV (with a 3HV molar content of 3%), 25 parts of P3HB4HB (with a 4HB molar content of 20%), 20 parts of talc, 5 parts of starch, 0.2 parts of titanium ester coupling agent TC-130, 0.15 parts of maleic anhydride, 0.15 parts of silane coupling agent CG-619, 0.1 parts of chain extender DX-5, 0.3 parts of chain extender 6901, 0.1 parts of chain extender HER, 0.5 parts of low molecular weight fully degradable polyester lubricant, 0.1 parts of calcium stearate, 0.1 parts of zinc stearate, 0.3 parts of fumed silica, 0.3 parts of polycarbodiimide UN-03, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 10.

**Table 10: Test Data for Straw-Specific Granules of PHBV + P3HB4HB + Talc + Starch**

| Test Item | Value |
|---|---|
| Melt Index at 170 °C, 2.16 kg (g/10 min) | 5.0 |
| Density (g/cm³) | 1.31 |
| Tensile Strength (MPa) | 28.2 |
| Tensile Elongation at Break (%) | 52.3 |
| Notched Izod Impact Strength (KJ/m²) | 4.3 |
| Heat Deflection Temperature at 0.45 MPa (°C) | 96 |
| Material Source | Biomass |
| Degradation Conditions | Natural Environment/Composting |

### Embodiment 9: PHB + P3HB4HB + Talc

Due to the generally high temperature and a certain of viscosity of coffee, the straws used for coffee require higher heat resistance and stronger mechanical properties.

A mixture comprising, in terms of parts by mass, 57 parts of PHB, 20 parts of P3HB4HB (with a 4HB molar content of 20%), 23 parts of talc, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 11.

**Table 11: Test Data for Coffee-Specific Straw Granules of PHB + P3HB4HB + Talc**

| Test Item | Value |
|---|---|
| Melt Index at 170 °C, 2.16 kg (g/10 min) | 4.4 |
| Density (g/cm³) | 1.31 |
| Tensile Strength (MPa) | 28.7 |
| Tensile Elongation at Break (%) | 50.5 |
| Notched Izod Impact Strength (KJ/m²) | 4.1 |
| Heat Deflection Temperature at 0.45 MPa (°C) | 101 |
| Material Source | Biomass |
| Degradation Conditions | Natural Environment/Composting |

### Embodiment 10: PHB + P3HB4HB + Talc

Due to the high viscosity of yogurt, it is common for children to bite a straw while drinking. Hence, straws used for yogurt require stronger mechanical properties and higher toughness.

A mixture comprising, in terms of parts by mass, 53 parts of PHB, 22 parts of P3HB4HB (with a 4HB molar content of 20%), 25 parts of talc, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 12.

**Table 12: Test Data for Yogurt-Specific Straw Granules of PHB + P3HB4HB + Talc**

| Test Item | Value |
|---|---|
| Melt Index at 170 °C, 2.16 kg (g/10 min) | 5.0 |
| Density (g/cm³) | 1.30 |
| Tensile Strength (MPa) | 28.5 |
| Tensile Elongation at Break (%) | 57.6 |
| Notched Izod Impact Strength (KJ/m²) | 4.6 |
| Heat Deflection Temperature at 0.45 MPa (°C) | 98.5 |
| Material Source | Biomass |
| Degradation Conditions | Natural Environment/Composting |

### Embodiment 11: PHB + P3HB4HB + Talc

Due to the difficulty in piercing the mouth of oral liquid bottles, straws used for oral liquids need to possess stronger mechanical properties and have fewer precipitates (reducing fillers).

A mixture comprising, in terms of parts by mass, 62 parts of PHB, 21 parts of P3HB4HB (with a 4HB molar content of 20%), 17 parts of talc, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60°C to 95 °C for 3 hours. The dried mixture was subsequently put into a twin-screw extruder for melting, blending, and extruding. The extrudate was stretched and pelletized by air-cooling. The twin-screw operated at temperatures between 140°C to 160 °C, with a screw speed of 230 rpm to 300 rpm; air-cooling temperature was maintained at 5°C to 45 °C to prepare the straw-specific granules.

The straw-specific granules prepared were fed into a straw extruder, and straws were extruded at temperatures between 140°C to 180 °C with a screw speed of 35 rpm to 50 rpm. The straws were subsequently shaped by water-cooling and cut into straws of specific lengths.

The test results of the obtained material are shown in Table 13.

**Table 13: Test Data for Oral Liquid-Specific Straw Granules of PHB + P3HB4HB + Talc**

| Test Item | Value |
|---|---|
| Melt Index at 170 °C, 2.16 kg (g/10 min) | 4.0 |
| Density (g/cm³) | 1.31 |
| Tensile Strength (MPa) | 28.9 |
| Tensile Elongation at Break (%) | 44.7 |
| Notched Izod Impact Strength (KJ/m²) | 3.9 |
| Heat Deflection Temperature at 0.45 MPa (°C) | 99.5 |
| Material Source | Biomass |
| Degradation Conditions | Natural Environment/Composting |

### Embodiment 12: PHB + P3HB4HB + Celite

A mixture comprising, in terms of parts by mass, 50 parts of PHB, 25 parts of P3HB4HB (with a 4HB molar content of 20%), 25 parts of celite, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert*-butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60°C to 95 °C for 3 hours. The dried mixture was subsequently put into a twin-screw extruder for melting, blending, and extruding. The extrudate was stretched and pelletized by air-cooling. The twin-screw operated at temperatures between 140°C to 160 °C, with a screw speed of 230 rpm to 300 rpm; air-cooling temperature was maintained at 5°C to 45 °C to prepare the straw-specific granules.

The straw-specific granules prepared were fed into a straw extruder, and straws were extruded at temperatures between 140°C to 180 °C with a screw speed of 35 rpm to 50 rpm. The straws were subsequently shaped by water-cooling and cut into straws of specific lengths.

The test results of the obtained material are shown in Table 14.

**Table 14: Test Data for Straw-Specific Granules of PHB + P3HB4HB + Celite**

| Test Item | Value |
|---|---|
| Melt Index at 170 °C, 2.16 kg (g/10 min) | 4.7 |
| Density (g/cm³) | 1.32 |
| Tensile Strength (MPa) | 24.1 |
| Tensile Elongation at Break (%) | 37.4 |
| Notched Izod Impact Strength (KJ/m²) | 3.6 |
| Heat Deflection Temperature at 0.45 MPa (°C) | 91 |
| Material Source | Biomass |
| Degradation Conditions | Natural Environment/Composting |

### Comparative Example 1: PHB + P3HB4HB + Calcium Carbonate with High Proportion of Calcium Carbonate

A mixture comprising, in terms of parts by mass, 30 parts of PHB, 15 parts of P3HB4HB (with a 4HB molar content of 20%), 55 parts of calcium carbonate, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[[3-(3,5-di-*tert*-butyl-4-hydroxyphenyl)propionic acid]pentaerythritol ester, 0.15 parts of tri(2,4-di-*tert*-butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized with air-cooling. The twin-screw operated at temperatures between 140 °C to 160 °C, with a screw speed of 230 rpm to 300 rpm; air-cooling temperature was maintained at 5 °C to 45 °C to prepare the straw-specific granules. The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 15. Although the thermal stability meets the requirements, the strength and toughness (such as tensile elongation at break or notched Izod impact strength) are significantly inferior compared to Embodiment 1.

**Table 15: Test Data for Straw-Specific Granules of PHB + P3HB4HB + Calcium Carbonate with High Proportion of Calcium Carbonate**

| Test Item | Value |
|---|---|
| Melt Index at 170 °C, 2.16 kg (g/10 min) | 4.7 |
| Density (g/cm³) | 1.4 |
| Tensile Strength (MPa) | 26.3 |
| Tensile Elongation at Break (%) | 25.1 |
| Notched Izod Impact Strength (KJ/m²) | 2.6 |
| Heat Deflection Temperature at 0.45 MPa (°C) | 95 |
| Material Source | Biomass |
| Degradation Conditions | Natural Environment/Composting |

### Comparative Example 2: PHB + PBS + PBT + Calcium Carbonate with Petroleum-Based Materials

A mixture comprising, in terms of parts by mass, 50 parts of PHB, 25 parts of a copolymer of PBS and PBT, 25 parts of calcium carbonate, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert-*butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 16. Although the material can degrade in natural environments/composting, the petroleum-based composition thereof compromises its environmental friendliness. In terms of material performance, the strength is acceptable, but the thermal stability is inferior compared to the embodiments.

**Table 16: Test Data for Straw-Specific Granules of PHB + PBS + PBT + Calcium Carbonate with Petroleum-Based Materials**

| Test Item | Value |
|---|---|
| Melt Index at 170 °C, 2.16 kg (g/10 min) | 4.0 |
| Density (g/cm³) | 1.3 |
| Tensile Strength (MPa) | 25.8 |
| Heat Deflection Temperature at 0.45 MPa (°C) | 81 |
| Material Source | Bio-based and petroleum-based |
| Degradation Conditions | Natural Environment/Composting |

### Comparative Example 3: PLA + PBS + PBT + Calcium Carbonate with Petroleum-Based Materials and without PHA

A mixture comprising, in terms of parts by mass, 50 parts of PLA, 25 parts of a copolymer of PBS and PBT, 25 parts of calcium carbonate, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[β-(3,5-di-*tert-*butyl-4-hydroxyphenyl)propionic acid]pentaerythritol ester, 0.15 parts of tri(2,4-di-*tert-*butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 17. Although the strength is acceptable, the toughness and thermal stability are inferior compared to the embodiments. Crucially, industrial composting is required for degradation.

**Table 17: Test Data for Straw-Specific Granules of PLA + PBS + PBT + Calcium Carbonate without PHA**

| Test Item | Value |
|---|---|
| Melt Index at 170 °C, 2.16 kg (g/10 min) | 4.0 |
| Density (g/cm³) | 1.32 |
| Tensile Strength (MPa) | 26.5 |
| Tensile Elongation at Break (%) | 28.2 |
| Heat Deflection Temperature at 0.45 MPa (°C) | 65 |
| Material Source | Bio-based and petroleum-based |
| Degradation Conditions | Industrial composting |

### Comparative Example 4: PHB + P3HB4HB + PLA + Talc

A mixture comprising, in terms of parts by mass, 20 parts of PHB, 10 parts of P3HB4HB (with a 4HB molar content of 20%), 45 parts of PLA, 25 parts of talc, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[[3-(3,5-di-*tert*-butyl-4-hydroxyphenyl)propionic acid]pentaerythritol ester, 0.15 parts of tri(2,4-di-*tert*-butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 18.

**Table 18: Test Data for Straw-Specific Granules of PHB + P3HB4HB + PLA + Talc**

| Test Item | Value |
|---|---|
| Melt Index at 170 °C, 2.16 kg (g/10 min) | 4.2 |
| Density (g/cm³) | 1.27 |
| Tensile Strength (MPa) | 26.9 |
| Tensile Elongation at Break (%) | 24.5 |
| Notched Izod Impact Strength (KJ/m²) | 2.7 |
| Heat Deflection Temperature at 0.45 MPa (°C) | 73 |
| Material Source | Biomass |
| Degradation Conditions | Natural Environment/Composting |

### Comparative Example 5: PHB + P3HB4HB + PBAT + Talc

A mixture comprising, in terms of parts by mass, 20 parts of PHB, 10 parts of P3HB4HB (with a 4HB molar content of 20%), 45 parts of PBAT, 25 parts of talc, 0.2 parts of silane coupling agent KH550, 0.1 parts of silane coupling agent CG-619, 0.2 parts of maleic anhydride, 0.3 parts of BASF ADR 4400, 0.2 parts of chain extender 6901, 0.5 parts of low molecular weight fully degradable polyester lubricant, 0.2 parts of calcium stearate, 0.3 parts of fumed silica, 0.2 parts of Shanghai Langyi HY2000 hydrolysis-resistant agent, 0.1 parts of hydrolysis-resistant agent TNPP, 0.3 parts of tetrakis[[β-(3,5-di-*tert*-butyl-4-hydroxyphenyl)propionic acid]pentaerythritol ester, 0.15 parts of tri(2,4-di-*tert*-butylphenyl)phosphite, and 0.1 parts of antioxidant CYANOX 1790 was mixed in a high-speed mixer for 5 minutes to 10 minutes. The mixture was dried at temperatures between 60 °C to 95 °C for 3 hours. The dried mixture was subsequently put into a twin-screw extruder for melting, blending, and extruding. The extrudate was stretched and pelletized by air-cooling. The twin-screw operated at temperatures between 140 °C to 160 °C, with a screw speed of 230 rpm to 300 rpm; air-cooling temperature was maintained at 5 °C to 45 °C to prepare the straw-specific granules.

The straw-specific granules prepared were fed into a straw extruder, and straws were extruded at temperatures between 140 °C to 180 °C with a screw speed of 35 rpm to 50 rpm. The straws were subsequently shaped by water-cooling and cut into straws of specific lengths.

The test results of the obtained material are shown in Table 19. Although the strength is acceptable, the thermal stability is inferior compared to the embodiments.

**Table 19: Test Data for Straw-Specific Granules of PHB + P3HB4HB + PBAT + Talc**

| Test Item | Value |
|---|---|
| Melt Index at 170 °C, 2.16 kg (g/10 min) | 6.4 |
| Density (g/cm³) | 1.28 |
| Tensile Strength (MPa) | 20.7 |
| Heat Deflection Temperature at 0.45 MPa (°C) | 85 |
| Material Source | Biomass |
| Degradation Conditions | Natural Environment/Composting |

Based on the results in Tables 3-14, it can be observed that the straws prepared in Embodiments 1-12 of the present application exhibit superior performance due to the use of specific components and their specific compositions. The materials prepared according to the present invention have low density and are cost-effective, featuring simple manufacturing processes which makes them suitable for industrial production. The present invention allows for adjustable performance by compounding various types of PHA to meet different performance requirements for straws in various usage scenarios. Specifically, Embodiments 9-11 regulate the proportions of various types of PHA and adjust the auxiliary agent proportions to suit applications in coffee, yogurt, oral liquids, and others. The preferred embodiments of the present invention are described in detail above, which, however, are not intended to limit the present invention. Within the scope of the technical concept of the present invention, multiple simple modifications can be made to the technical solutions herein, including combining various technical features in any other suitable manner. These simple modifications and combinations should also be considered as part of the disclosed content of the present invention and fall within the scope of protection.

## Claims

1. A biodegradable material, comprising a resin, wherein the resin is PHA; a mass content of the PHA in the biodegradable material isin a range from 50% to 98%, preferably 70% to 98%.

2. The biodegradable material according to claim 1, further comprising a filler and/or an auxiliary agent.

3. The biodegradable material according to claim 2, wherein a mass ratio of the PHA to the filler is in a range of 1:1 to 25:1, preferably1:1 to 20:1 or 1:5 to 10:1, and further preferably 2:1 to 5:1.

4. The biodegradable material according to claim 2 or 3, wherein the filler comprises one, two, or more of talc, calcium carbonate, starch, celite, or kaolin.

5. The biodegradable material according to claim 2, wherein a mass ratio of the PHA to the auxiliary agent in the biodegradable material is in a range of 15:1 to 50:1, preferably 20:1 to 40:1.

6. The biodegradable material according to claim 2 or 5, wherein the auxiliary agent comprises one, two, or more of a coupling agent, a chain extender, a lubricant, a heat stabilizer, a hydrolysis-resistant agent, or an antioxidant.

7. The biodegradable material according to claim 6, wherein the coupling agent comprises one, two, or more of titanium ester coupling agent TC-201, titanium ester coupling agent TC-TTS, titanium ester coupling agent TC-130, titanium ester coupling agent TC-131, maleic anhydride, silane coupling agent KH550, silane coupling agent KH560, silane coupling agent KH570, silane coupling agent CG-619, silane coupling agent CG-580, or silane coupling agent CG-590;
the chain extender comprises one, two, or more of chain extender BASF ADR 4400, chain extender BASF ADR 4468, chain extender DX-5, chain extender 6901, chain extender MSA7200, or chain extender HER;
the lubricant comprises fully degradable polyester and/or PHA serving as a lubricant; preferably, a molecular weight of the fully degradable polyester is 1000 to 8000, and a molecular weight of the PHA serving as a lubricant is 1500 to 8000;
the heat stabilizer comprises one, two, or more of calcium stearate, zinc stearate, nanocellulose, nano-montmorillonite, or fumed silica;
the hydrolysis-resistant agent comprises Shanghai Langyi HY2000, polycarbodiimide UN-03, and/or hydrolysis-resistant agent TNPP;
the antioxidant comprises tetrakis[[3-(3,5-di-*tert*-butyl-4-hydroxyphenyl)propionic acid]pentaerythritol ester, tri(2,4-di-*tert*-butylphenyl)phosphite, and/or CYANOX 1790.

8. The biodegradable material according to any one of claims 1-7, wherein the biodegradable material comprises a resin, a filler, and an auxiliary agent, wherein the resin is PHA, wherein a mass ratio of the PHA to the filler to the auxiliary agent is 1: (0-1): (0-0.067), preferably 1: (0.04-1): (0.02-0.067) or 1: (0.04-0.5): (0.025-0.05).

9. The biodegradable material according to any one of claims 1-8, wherein the PHA comprises a homopolymer or a copolymer of monomers constituting the PHA;
preferably, the monomers constituting the PHA comprise one, two, three, or more of 3-hydroxybutyric acid, 4-hydroxybutyric acid, 3-hydroxyvaleric acid, 3-hydroxypropionic acid, 5-hydroxypentanoic acid, 3-hydroxyhexanoic acid, 6-hydroxyhexanoic acid, 3-hydroxyoctanoic acid, or 3-hydroxynonanoic acid;
further preferably, the PHA comprises one, two, or more of PHB, PHV, P3HP, PHO, PHN, PHBV, P34HB, or PHBHHx.

10. The biodegradable material according to any one of claims 1-6, comprising a straw.

11. A method for preparing the biodegradable material according to claim 1, comprising mixing raw materials to obtain a mixture, and subsequently extruding the mixture from an extruder, wherein the raw materials comprise a resin.

12. The method for preparing the biodegradable material according to claim 11, wherein the biodegradable material is a straw, and the preparation method comprises:
S1: mixing PHA, a filler, and/or an auxiliary agent to obtain a mixture;
S2: extruding the mixture obtained from S1 from a twin-screw extruder, stretching and pelletizing the extrudate, and subsequently feeding the granules into a straw extruder.

13. The method for preparing the biodegradable material according to claim 12, wherein the twin-screw extruder operates at temperatures between 100 °C to 160 °C, with a screw speed of 200 rpm to 350 rpm.

14. The method for preparing the biodegradable material according to claim 12, wherein
the straw extruder operates at temperatures between 120 °C to 200 °C, with a screw speed of 30 rpm to 80 rpm.

15. The method for preparing the biodegradable material according to claim 12, wherein
the stretching and pelletization method is performed by air-cooling or water-cooling, preferably by air-cooling, and further preferably by air-cooling at temperatures between 0 °C to 50 °C.

16. The method for preparing the biodegradable material according to any one of claims 11 to 15, comprising:
S1: mixing the PHA, the filler, and the auxiliary agent in a mixer for 1 minute to 10 minutes, drying the mixture at temperatures between 50 °C to 100 °C for 1 hour to 5 hours to obtain a dried mixture;
S2: feeding the dried mixture obtained from S1 into the twin-screw extruder, melting, blending, and extruding the mixture at temperatures between 140 °C to 160 °C with a screw speed of 230 rpm to 300 rpm, followed by stretching and pelletizing the extrudate by air-cooling to obtain straw-specific granules;
S3: feeding the straw-specific granules obtained from S2 into the straw extruder, extruding straws at temperatures between 140 °C to 180 °C with a screw speed of 35 rpm to 50 rpm, and shaping the straws by water-cooling to obtain final straws.
